# EUROPÄISCHE PATENTSCHRIFT

(11) **EP 3 200 950 B1**
(45) Veröffentlichungstag und Bekanntmachung des Hinweises auf die Patenterteilung: **25.12.2019**
(21) Anmeldenummer: 15760110.5
(22) Anmeldetag: 21.08.2015
(51) Int. Cl.: B21D 22/02, B23K 20/227, B32B 15/18, C21D 8/04, C21D 1/673, B23K 101/00, B23K 103/16, B23K 20/04, B32B 15/01, C21D 8/02, C22C 38/02, C22C 38/06, C22C 38/32, B21D 35/00, C21D 9/46, C22C 38/38, B23K 103/04, C22C 38/04, C22C 38/28

(54) **MEHRSCHICHTIGES STAHLFLACHPRODUKT UND DARAUS HERGESTELLTES BAUTEIL**
MULTILAYERED FLAT STEEL PRODUCT AND COMPONENT PRODUCED THEREFROM
PRODUIT PLAT MULTICOUCHÉ EN ACIER ET COMPOSANT FABRIQUÉ DE CE PRODUIT

(30) Priorität: 02.10.2014 DE 102014114365
(43) Veröffentlichungstag der Anmeldung: 09.08.2017
(73) Patentinhaber: ThyssenKrupp Steel Europe AG, 47166 Duisburg (DE)
(72) Erfinder: BECKER, Jens-Ulrik, 47058 Duisburg (DE); MYSLOWICKI, Stefan, 41238 Mönchengladbach (DE)
(74) Vertreter: ThyssenKrupp Steel Europe AG
(86) Internationale Anmeldenummer: PCT/EP2015/069277
(87) Internationale Veröffentlichungsnummer: WO 2016/050417

(56) Entgegenhaltungen:
- EP-A1- 2 111 937
- EP-A1- 2 228 459
- EP-A1- 2 228 459
- DE-A1-102007 022 453
- DE-B3-102005 006 606
- JP-A- H06 256 905
- MARION MERKLEIN ET AL: "A review on tailored blanks-Production, applications and evaluation", JOURNAL OF MATERIALS PROCESSING TECHNOLOGY, ELSEVIER, NL, Bd. 214, Nr. 2, 1. Februar 2014 (2014-02-01), Seiten 151-164, XP002737865, ISSN: 0924-0136, DOI: 10.1016/J.JMATPROTEC.2013.08.015 [gefunden am 2013-09-06]

## Beschreibung

Die vorliegende Erfindung betrifft ein mindestens fünfschichtiges Stahlflachprodukt , wie in Anspruch 1 definiert, bestehend aus einer Mehrzahl durch Warmwalzen stoffschlüssig miteinander verbundener Stahllegierungsschichten, wobei in mindestens einer der Stahllegierungsschichten ein Stahl einer ersten Stahllegierung und in mindestens einer anderen der Stahllegierungsschichten ein Stahl einer zweiten Stahllegierung, die von der ersten Stahllegierung verschieden ist, vorgesehen ist, wobei der Stahl der ersten Stahllegierung ein Stahl mit hoher Festigkeit und der Stahl der zweiten Stahllegierung ein Stahl mit geringerer Festigkeit und einem geringeren Kohlenstoffanteil (als der Stahl der ersten Stahllegierung) ist.

Ferner betrifft die Erfindung ein Bauteil für eine Fahrzeugkomponente gemäß Anspruch 10.

Unter dem Begriff "Stahlflachprodukt" werden hier durch einen Walzprozess erzeugte Stahlbleche oder Stahlbänder sowie davon abgeteilte Platinen und dergleichen verstanden.

Die im Bereich des Automobilbaus an die Passagiersicherheit im Crashfall gestellten Anforderungen steigen immer weiter. Gleichzeitig stellt der Leichtbau eine wichtige Voraussetzung für die Einhaltung der gesetzlich vorgegebenen CO₂-Grenzwerte und für die Minimierung des zum Antrieb des Fahrzeugs benötigten Energieeinsatzes dar. Ebenso bestehen auch seitens der Nutzer von Fahrzeugen immer höhere Ansprüche hinsichtlich des Komforts, was zu einem erhöhten Anteil von elektronischen Komponenten im Fahrzeug und einem dadurch zunehmenden Fahrzeuggewicht führt. Um diese widersprüchlichen Anforderungen gleichzeitig zu erfüllen, steht seit längerem die Leichtbauweise bei der Fertigung von Karosseriestrukturen für den Automobilbau im Fokus.

Für crashrelevante Automobilbauteile haben sich hier insbesondere Bauteile durchgesetzt, die durch Warmumformen und im Anschluss daran erfolgendes Härten von Stahlflachprodukten hergestellt werden, die aus einem Mangan-Bor-Stahl bestehen. Durch diese in der Fachsprache auch als Presshärten bezeichnete Fertigungsmethode können Bauteile hergestellt werden, die sich trotz optimal dünner Wandstärken und damit einhergehend minimiertem Gewicht an hinsichtlich ihres Verhaltens im Falle eines Crashs besonders sensiblen Punkten einer Fahrzeugkarosserie einsetzen lassen.

Es sei darauf hingewiesen, dass die vorliegende Erfindung nicht nur auf den Automobilbau beschränkt ist, sondern allgemein im industriellen Einsatzbereich Anwendung finden kann. In allen Bereichen, aber speziell im automobilen Einsatzbereich, werden lokal unterschiedliche Anforderungen an die Bauteile hinsichtlich der Materialeigenschaften gestellt. Als Materialeigenschaften seien beispielhaft die Festigkeit und Duktilität erwähnt. "Lokal" bedeutet, dass an einen ersten Abschnitt des Bauteils andere Anforderungen als an einen zweiten Abschnitt gestellt werden. Da diese Anforderungen auch gegensätzlich sein können, ist eine Lösung mit singulären Konstruktionswerkstoffen, die also durchgängig dieselben Materialeigenschaften haben, maximal ein Kompromiss aus allen gestellten Einzelanforderungen. Nicht nur im Zuge von Leichtbaubestrebungen im Automobilbau werden daher verstärkt maßgeschneiderte Werkstoffe eingesetzt, die durch lokal unterschiedliche Materialeigenschaften eine Optimierung von Bauteilen, zum Beispiel hinsichtlich ihres Gewichts durch Reduzierung der Blechdicke, ermöglichen. Die Realisierung eines darüber hinausgehenden Leichtbaus bedingt aber zusätzlich auch innerhalb einzelner Bauteilabschnitte die Erfüllung teils konträrer Materialeigenschaften. Dies bedeutet, dass für eine konsequente Weiterverfolgung von Leichtbau nicht nur lokal unterschiedliche Materialeigenschaften in der Blechebene, das heißt in Längsrichtung (Richtung der Bandlänge) und in der Querrichtung (Richtung der Bandbreite), sondern auch senkrecht dazu (Richtung der Blechdicke) wünschenswert sind.

Im Folgenden wird die Längsrichtung auch als Richtung X, die Querrichtung auch als Richtung Y und die Richtung der Blechdicke auch als Richtung Z bezeichnet.

Aus dem Stand der Technik ist es bekannt, bei der Serienfertigung von Bauteilen die Einstellung lokal unterschiedlicher Materialeigenschaften innerhalb der Blechebene durch Verfahren wie Tailored Blanks (Kalt- bzw. Warmumformung) oder Tailored Tempering (Warmumformung) zu ermöglichen. Die funktionsoptimierte Modellierung von Materialeigenschaften in Richtung der Blechdicke (Richtung Z) kann durch den Einsatz von mehrschichtigen Stahlflachprodukten erreicht werden. EP 2228459 A1 beschreibt solche Tailored Blanks.

Ein mehrschichtiges Stahlflachprodukt bestehend aus einer Mehrzahl miteinander verbundener Stahllegierungsschichten mit mindestens einer Kernschicht beschreibt beispielsweise die DE 10 2007 022 453 A1. Die Kernschicht soll dabei aus einer weichen, gut verformbaren Stahllegierung bestehen, wohingegen die äußeren Schichten des Stahlflachprodukts aus einer höchstfesten Stahllegierung bestehen sollen.

In der Pressemitteilung unter dem Link www.thyssenkrupp-steel-europe.com/en/presse/pressrelease.jsp?cid=2778030 vom 27. Mai 2014 veröffentlichte die Anmelderin ein neues Produkt mit der Bezeichnung TriBond® - "three layer steel composite for hot forming", bei dem es sich um ein mehrschichtiges Stahlflachprodukt mit einer Kernlage mit einem relativ hohen Kohlenstoffgehalt und äußeren Schichten mit einem relativ niedrigen Kohlenstoffgehalt handelt. Das Stahlflachprodukt ist zur Herstellung eines Bauteils für eine Fahrzeugkarosserie vorgesehen, welches warmumgeformt und gehärtet wird.

Davon ausgehend ist es eine Aufgabe der vorliegenden Erfindung, bei einem Stahlflachprodukt eine funktionsoptimierte Modellierung lokaler Werksstoffeigenschaften in alle Richtungen (Blechebene, Blechdicke) zu ermöglichen.

Die zuvor hergeleitete und aufgezeigte Aufgabe wird durch ein mindestens fünfschichtiges Stahlflachprodukt gemäß Anspurch 1 gelöst.

Im einfachsten Fall wechseln sich bei dem erfindungsgemäßen Stahlflachprodukt Schichten aus hochfestem Stahl (d.h. Schichten mit relativ hohem Kohlenstoffanteil) mit Schichten aus Stahl mit im Vergleich dazu geringerer Festigkeit und geringerem Kohlenstoffanteil ab, insbesondere innerhalb einzelner Schichten, beispielsweise in einer Zwischenschicht zwischen einer Kernschicht und jeweils einer der äußeren Schichten (Deckschichten), wobei sich Abschnitte aus einem Stahl mit hoher Festigkeit und einem Stahl mit geringerer Festigkeit und geringerem Kohlenstoffanteil abwechseln. Abschnitte mit solch unterschiedlichen Stahllegierungen bzw. unterschiedlichen Kohlenstoffanteilen können in Längsrichtung (Richtung X) und/oder in Querrichtung (Richtung Y) und/oder in Richtung des Schichtaufbaus (Richtung Z) unmittelbar nebeneinander angeordnet sein, das heißt aneinander angrenzen, und/oder sich abwechseln. Durch Warmumformen/Presshärten eines solchen Stahlflachprodukts lassen sich Bauteile herstellen, die in unterschiedlichen Abschnitten unterschiedliche Materialeigenschaften, beispielsweise hinsichtlich der Festigkeit und des Biegewinkels, aufweisen.

Stähle mit hoher Festigkeit im Sinne der Erfindung sind Stähle aus einer Stahllegierung gemäß Anspruch mit einem Kohlenstoffgehalt von mindestens 0,2 Gew.-% und bis zu 0.5 Gew.-%, die im Endzustand (gehärtet) Zugfestigkeiten von mindestens 1200 MPa, insbesondere mindestens 1350 MPa, vorzugsweise mindestens 1450 MPa aufweisen. Definiert sind sie in der DIN EN 10083, beispielsweise Mangan-Bor-Stähle.

Erfindungsgemäß wird auf diese Weise eine funktionsoptimierte Modellierung lokaler Werkstoffeigenschaften in alle Richtungen von Blechplatinen (Blechebene, Blechdicke) ermöglicht. Die in einem Werkstoffverbund eingestellten Materialeigenschaften werden maßgeblich durch die Wahl der miteinander kombinierten Verbundpartner sowie deren Anteil und Verteilung in Richtung der Blechebene und/oder Blechdicke bestimmt. Zur Erzeugung dieser Werkstoffverbunde werden Brammen, Vorblöcke, Vorbänder bzw. Platinen (Stahlflachprodukte) der beteiligten Verbundpartner mit konstantem Querschnitt übereinander gebracht und insbesondere durch Walzplattieren miteinander verbunden. Die Einstellung von in der Blechebene variierenden Verbundeigenschaften wird insbesondere durch eine inhomogene Verteilung der beteiligten Verbundpartner realisiert.

Im Folgenden werden nun verschiedene Ausgestaltungen des erfindungsgemäßen Stahlflachprodukts beschrieben, die auch Gegenstand der Unteransprüche sind.

Erfindungsgemäß ist vorgesehen, dass der Kohlenstoffanteil des Stahls der ersten Stahllegierung mit hoher Festigkeit, die also den höheren Kohlenstoffanteil aufweist, einen Wert in einem Bereich von 0,20 - 0,50 Gew.-%, bevorzugt in einem Bereich von 0,20 - 0,45 Gew.-%, und/oder der Kohlenstoffanteil des Stahls der zweiten Stahllegierung mit geringer Festigkeit, die also den geringeren Kohlenstoffanteil aufweist, einen Wert in einem Bereich bis zu 0,15 Gew.-%, bevorzugt in einem Bereich von 0,02 - 0,15 Gew.-%, besonders bevorzugt in einem Bereich von 0,02 - 0,11 Gew.-%, hat. Beispielsweise kann der Kohlenstoffanteil des Stahls der ersten Stahllegierung 0,22 Gew.-% und der Kohlenstoffanteil des Stahls der zweiten Stahllegierung 0,10 Gew.-% betragen.

Gemäß einer weiteren Ausgestaltung des erfindungsgemäßen Stahlflachprodukts besteht dieses aus einer ungeraden Anzahl von Stahllegierungsschichten. Vorzugsweise besteht das Stahlflachprodukt erfindungsgemäß aus fünf Stahllegierungsschichten. In letzterem Fall weist das Stahlflachprodukt eine Kernschicht, zu beiden Seiten unmittelbar daran angrenzende Zwischenschichten und eine jeweils an jede Zwischenschicht außen angrenzende äußere Schicht (Deckschicht) auf.

Vorzugsweise weist das Stahlflachprodukt eine Kernschicht auf, die aus einer Stahllegierungsschicht mit dem Stahl der ersten Stahllegierung mit hoher Festigkeit (mit dem höheren Kohlenstoffanteil) besteht. Weiterhin bevorzugt ist auf beiden Seiten der Kernschicht mindestens eine Stahllegierungsschicht vorgesehen, die aus mindestens einer Stahllegierungsschicht mit dem Stahl der zweiten Stahllegierung mit geringer Festigkeit (mit dem geringeren Kohlenstoffanteil) besteht. Beispielsweise kann die Kernschicht vollständig aus der ersten Stahllegierung mit hoher Festigkeit (mit dem höheren Kohlenstoffanteil) bestehen und/oder die äußeren Schichten (gemeint sind die beiden die Außenseiten bildenden Deckschichten) können vollständig aus der zweiten Stahllegierung mit geringer Festigkeit (mit dem geringeren Kohlenstoffanteil) bestehen.

In einer Zwischenschicht oder in beiden Zwischenschichten zwischen Kernschicht und jeweiliger Deckschicht können sich Abschnitte aus der ersten Stahllegierung und Abschnitte aus der zweiten Stahllegierung abwechseln bzw. nebeneinander angeordnet sein, und zwar in Richtung X und/oder in Richtung Y und/oder in Richtung Z, wobei grundsätzlich in den Zwischenschichten auch vollständig nur ein und dieselbe Stahllegierung vorgesehen sein kann.

Wird ein solches Stahlflachprodukt später gehärtet, beispielsweise im Zuge der Herstellung eines Bauteils, beispielsweise eines Bauteils für eine Fahrzeugkarosserie, erhalten die einzelnen Abschnitte aus den unterschiedlichen Stahllegierungen unterschiedliche Materialeigenschaften, indem einzelne Abschnitte hohe Festigkeiten und andere Abschnitte geringere Festigkeiten aufweisen. In dem Fall, dass als zweite Stahllegierung ein Stahl mit geringerer Festigkeit eingesetzt wird, findet bei einem Presshärten in diesem Abschnitt auch keine bis geringfügige Härtung statt, sondern es werden nur die Abschnitte im Stahlflachprodukt gehärtet, die aus härtbarem Stahl bestehen.

Wie zuvor erläutert, kann also gemäß einer weiteren Ausgestaltung vorgesehen sein, dass die mindestens eine Stahllegierungsschicht mit dem Stahl der ersten Stahllegierung mit hoher Festigkeit, insbesondere die Kernschicht, und/oder die mindestens eine Stahllegierungsschicht mit dem Stahl der zweiten Stahllegierung mit geringer Festigkeit, insbesondere mindestens eine der äußeren Schichten, durchgängig aus demselben Stahl besteht. Ferner ist vorgesehen, dass die mindestens eine Stahllegierungsschicht mit dem Stahl der ersten Stahllegierung und die mindestens eine Stahllegierungsschicht mit dem Stahl der zweiten Stahllegierung mindestens einen Abschnitt aus einem Stahl der jeweils anderen Stahllegierung aufweist. Dabei ist es denkbar, dass in Längsrichtung und/oder in Querrichtung und/oder in Richtung des Schichtaufbaus ein Abschnitt aus einem Stahl der ersten Stahllegierung an einen Abschnitt aus einem Stahl der zweiten Stahllegierung angrenzt.

Gemäß wieder einer weiteren Ausgestaltung des erfindungsgemäßen Stahlflachprodukts ist vorgesehen, dass die Kernschicht 30 - 90 %, insbesondere 50 - 80 %, der Dicke des Stahlflachprodukts einnimmt. Auch bei einem aus einem erfindungsgemäßen Stahlflachprodukt hergestellten warmumgeformten/pressgehärteten Bauteil ist bevorzugt, wenn die Kernschicht 30 - 90 %, insbesondere 50 - 80 %, der Gesamtdicke des Stahlblechs des Bauteils einnimmt. Das Dickenverhältnis von Deckschicht zu Kernschicht kann abhängig davon gesetzt werden, welche Eigenschaft des erfindungsgemäßen Stahlflachprodukts in den Vordergrund gestellt werden soll. Die Kernschicht ist vorzugsweise grundsätzlich dicker als eine einzelne der übrigen Schichten. Beispielsweise nimmt die Kernschicht bei einem fünfschichtigen Aufbau 50 % und jede der vier übrigen Schichten jeweils 12,5 % der Gesamtdicke des Stahlflachprodukts oder Stahlblechs des Bauteils ein. Ein entsprechendes Stahlflachprodukt eignet sich beispielsweise als Halbzeug für einen Längsträger im Automobilbau. Die Dicke der Kernschicht kann sogar noch größer gewählt werden und kann beispielsweise 70 % der Gesamtdicke des Stahlflachprodukts oder Stahlblechs des Bauteils einnehmen, wobei dann die übrigen vier Schichten beispielsweise jeweils 7,5 % der Gesamtdicke einnehmen. Ein entsprechendes Stahlflachprodukt kann beispielsweise als Halbzeug für B-Säulen im Automobilbau verwendet werden.

Erfindungsgemäß sind alle Stahllegierungsschichten durch Warmwalzen bzw. Walzplattieren stoffschlüssig mit der/den jeweils benachbarten Stahllegierungsschicht(en) verbunden.

Ein insbesondere für die Kernschicht in der Praxis einsetzbarer Stahl bzw. der Stahl der ersten Stahllegierung besteht erfindungsgemäß neben Eisen und herstellungsbedingt unvermeidbaren Verunreinigungen aus (in Gew.-%)

| | |
|---|---|
| C: | 0,2 - 0,5 %, insbesondere 0,2 - 0,45 %, |
| Si: | 0,15 - 0,8 %, insbesondere 0,2 - 0,6 %, |
| Mn: | 1,0 - 1,9 %, insbesondere 1,15 - 1,7 %, |
| Al: | 0,002 - 0,05 %, insbesondere 0,01 - 0,04 %, |
| Cr: | 0,01 - 0,5 %, insbesondere 0,02 - 0,4 %, |
| Ti: | 0,01 - 0,5 %, insbesondere 0,02 - 0,3 %, |
| B: | 0,0002 - 0,05 %, insbesondere 0,001 - 0,02 %. |

Zu den Verunreinigungen zählen dabei P: bis zu 0,03 %, S: bis zu 0,03 %, Cu: bis zu 0,1 %, Mo: bis zu 0,05 %, N: bis zu 0,02 %, Ni: bis zu 0,1 %, Nb: bis zu 0,2 %, V: bis zu 0,01 %, Sn: bis zu 0,03 %, Ca: bis zu 0,01 %.

Eine der äußeren Schichten oder beide äußeren Schichten bzw. eine oder beide Zwischenschichten eines erfindungsgemäßen Stahlflachprodukts bzw. der Stahl der zweiten Stahllegierung besteht/bestehen dagegen erfindungsgemäß aus einem Stahl, der neben Eisen und herstellungsbedingt unvermeidbaren Verunreinigungen aus (in Gew.-%)

| | |
|---|---|
| C: | bis zu 0,15 %, insbesondere 0,02 - 0,11, |
| Si: | bis zu 0,7 %, insbesondere 0,01 - 0,6 %, |
| Mn: | 0,10 - 1,9 %, insbesondere 0,13 - 1,8 %, |
| Al: | bis zu 0,6 %, insbesondere 0,001 - 0,2 %, |
| Cr: | bis zu 0,6 %, insbesondere 0,025 - 0,5 %, |
| Nb: | bis zu 0,5 %, insbesondere 0,002 - 0,2 %, |
| Ti: | bis zu 0,5 %, insbesondere 0,02 - 0,3 %, |

besteht. Zu den Verunreinigungen zählen dabei P: bis zu 0,25 %, S: bis zu 0,15 %, Cu: bis zu 0,15 %, Mo: bis zu 0,05 %, N: bis zu 0,06 %, Ni: bis zu 0,15 %, V: bis zu 0,02 %, B: bis zu 0,01 %, Sn: bis zu 0,04 % und Ca: bis zu 0,03 %.

Die Aufgabe wird ferner gelöst durch ein Bauteil, insbesondere für eine Fahrzeugkarosserie, hergestellt durch Warmumformen/Presshärten eines wie zuvor definierten Stahlflachprodukts. Beim Warmumformen/Presshärten wird zumindest der Stahl mit dem relativ hohen Kohlenstoffanteil (d.h. der Stahl der ersten Stahllegierung) gehärtet und erhält seine hohe Festigkeit (im Endzustand), beispielsweise eine Zugfestigkeit von mindestens 1200 MPa, insbesondere mindestens 1350 MPa, vorzugsweise mindestens 1450 MPa. Ein solches Bauteil kann beispielsweise ein Längsträger oder eine B-Säule eines Kraftfahrzeugs sein.

Kern der vorliegenden Erfindung ist ein mindestens fünfschichtiger Stahlwerkstoffverbund, der insbesondere eine Kernschicht umfasst, die aus einem härtbaren Stahlwerkstoff besteht. Je nach Ausführung des herzustellenden Bauteils und unter Berücksichtigung bei im Crashfall aufzunehmenden radialen und/oder axialen Kräften, werden Blech-/Brammenpakete anforderungsgerecht zusammengestellt und auf eine erforderliche (End-)Dicke warmgewalzt ggf. kaltgewalzt, geglüht und/oder oberflächenveredelt. Durch eine Kombination aus Stahlwerkstoffen mit hohen und geringen Festigkeiten, insbesondere mit unterschiedlichem Kohlenstoffanteil, können Bauteile mit lokal unterschiedlichen Festigkeiten und Biegewinkel bereitgestellt werden, die in einer konventionellen Warmumformungslinie hergestellt werden können, das heißt die Halbzeuge werden vollständig austenitisiert und in gekühlten Werkzeugen warmumgeformt und/oder pressgehärtet. Ein zusätzliches Anlassen kann nach dem (Press-)Härten erfolgen. Durch die Werkstoffkombination im Halbzeug können gezielt Bereiche mit unterschiedlichen Eigenschaften eingestellt werden, ohne ein Tailored Tempering vor, während oder nach dem Warmumformen durchführen zu müssen.

Es gibt nun eine Vielzahl von Möglichkeiten, das erfindungsgemäße, mehrschichtige Stahlflachprodukt und das erfindungsgemäße Bauteil auszugestalten und weiterzubilden. Hierzu wird verwiesen einerseits auf die dem Patentanspruch 1 nachgeordneten Patentansprüche, andererseits auf die Beschreibung von Ausführungsbeispielen in Verbindung mit der Zeichnung. In der Zeichnung zeigen:
- Figuren 1a) und b): Ausführungsbeispiele eines erfindungsgemäßen Bauteils in einer Schnittansicht,
- Figuren 1c) und d): Ansichten eines Ausführungsbeispiels eines erfindungsgemäßen Stahlflachprodukts und
- Fig. 2: weitere Ausführungsbeispiele eines erfindungsgemäßen Stahlflachprodukts in einer Schnittansicht.

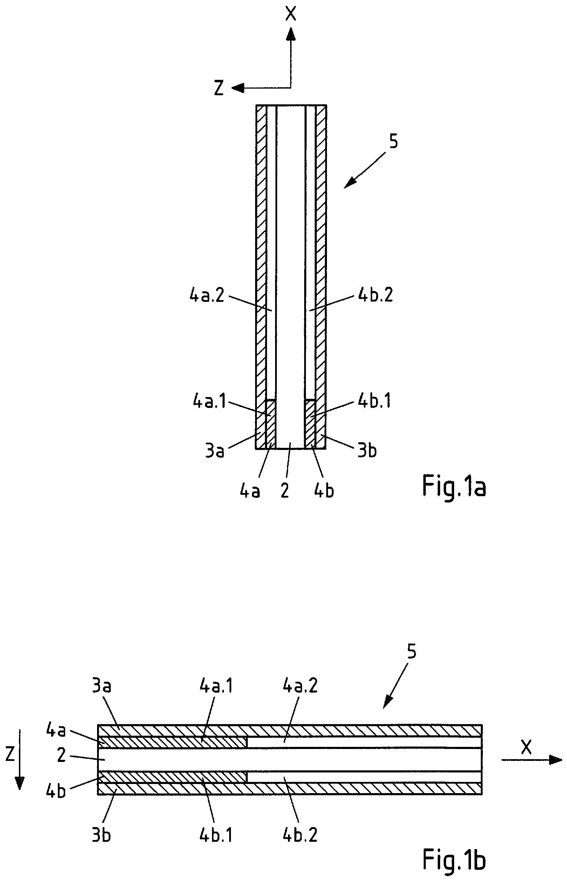

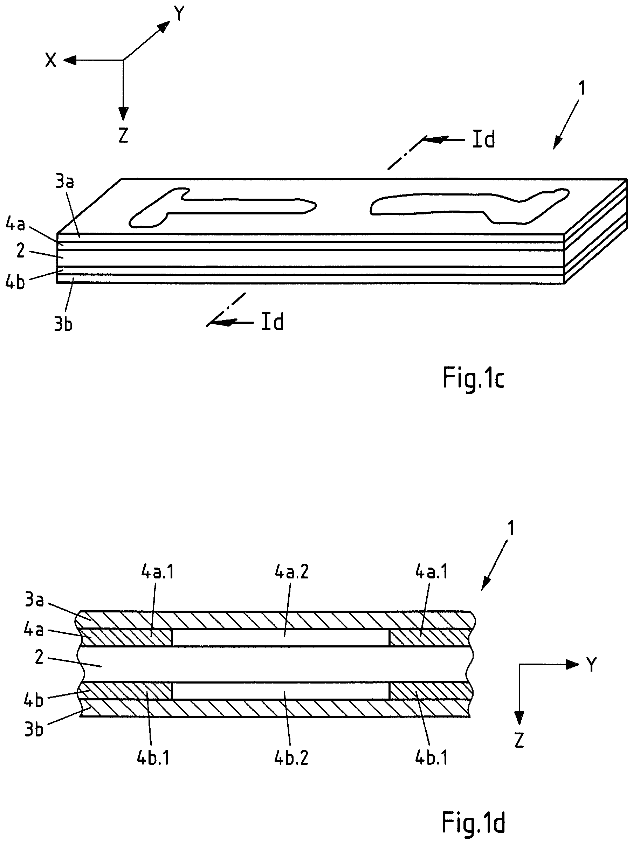

Fig. 1a) zeigt schematisch in einer Querschnittsansicht ein Bauteil 5 für eine Fahrzeugkarosserie, beispielweise eine B-Säule, hergestellt durch Warmumformen/Presshärten eines entsprechenden Stahlflachprodukts 1. Beispiele für Stahlflachprodukte 1 sind in den Figuren 1c) und d) sowie 2 dargestellt.

Fig. 1b) zeigt schematisch ein anderes Bauteil 5 für eine Fahrzeugkarosserie, beispielsweise einen Fahrzeuglängsträger. Dieses Bauteil 5 ist ebenfalls aus einem erfindungsgemäßen Stahlflachprodukt 1 auf die beschriebene Weise hergestellt.

Das Bauteil 5 und das zugrundeliegende Stahlflachprodukt 1 besteht aus einer Mehrzahl miteinander verbundener Stahllegierungsschichten: einer Kernschicht 2, zwei äußeren Deckschichten 3a und 3b und jeweils zwischen den Deckschichten 3a und 3b und der Kernschicht 2 angeordneten Zwischenschichten 4a und 4b. Das Bauteil 5 hat hier also einen fünfschichtigen Aufbau.

Die Kernschicht 2 besteht hier aus einem härtbaren Stahl mit hoher Festigkeit (im Endzustand) mit einem relativ hohen Kohlenstoffanteil, wohingegen die äußeren Schichten 3a und 3b nicht aus einem härtbaren bzw. nur geringfügig härtbaren Stahl mit geringerer Festigkeit bestehen, die einen geringeren Kohlenstoffanteil als die Kernschicht 2 haben. Die Zwischenschichten 4a und 4b weisen jeweils sowohl einen Abschnitt 4a.1 bzw. 4b.1 aus einem Stahl mit relativ geringem Kohlenstoffanteil, als auch einen Abschnitt 4a.2 bzw. 4b.2 aus einem Stahl mit einem relativ hohen Kohlenstoffanteil auf. In der Kernschicht 2 und in den Abschnitten 4a.2 und 4b.2 der Zwischenschichten 4a und 4b hat der Kohlenstoffanteil einen Wert in einem Bereich von beispielsweise 0,20 bis 0,65 Gew.-% und beträgt insbesondere 0,22 Gew.-%. In den äußeren Schichten 3a und 3b sowie in den Abschnitten 4a.1 und 4b.1 der Zwischenschichten 4a und 4b hat der Kohlenstoffanteil beispielsweise einen Wert in einem Bereich von weniger als 0,20 Gew.-% und beträgt insbesondere weniger als 0,15 Gew.-%.

Bei dem Bauteil 5 in Fig. 1a) ist erkennbar, dass im unteren Bereich nur die Kernschicht 2 aus einem härtbaren Stahl mit hohem Kohlenstoffanteil besteht, wohingegen die übrigen Schichten 3a, 3b, 4a und 4b im unteren Bereich aus einem anderen Stahl mit geringerer Festigkeit und geringerem Kohlenstoffanteil bestehen. Entsprechendes gilt für den linken Bereich des Bauteils 5 in Fig. 1b). Der übrige Bereich des jeweiligen Bauteils 5 (oberer Bereich des Bauteils 5 in Fig. 1a) und rechter Bereich des Bauteils 5 in Fig. 1b)) ist so aufgebaut, dass hier sowohl die Kernschicht 2 als auch die Zwischenschichten 4a und 4b aus härtbarem Stahl mit relativ hohem Kohlenstoffanteil bestehen, wohingegen nur die äußeren Schichten 3a und 3b aus einem Stahl mit geringerer Festigkeit und geringerem Kohlenstoffanteil bestehen.

Ferner ist zu erkennen, dass bei dem Bauteil 5 in Fig. 1a) die Kernschicht 2 dicker als bei dem Bauteil 5 in Fig. 1b) ist. Das Dickenverhältnis in Fig. 1a) (von der linken äußeren Schicht zur rechten äußeren Schicht) beträgt beispielsweise 10:10:60:10:10. Das Dickenverhältnis in Fig. 1b) beträgt beispielsweise (von der oberen äußeren Schicht zu der unteren äußeren Schicht) 12,5:12,5:50:12,5:12,5.

In beiden Ausführungsbeispielen sind die Schichtdicken der beiden äußeren Schichten 3a und 3b identisch. Auch die Schichtdicken der beiden Zwischenschichten 4a und 4b sind hier identisch. Insbesondere sind die Schichtdicken der äußeren Schichten 3a und 3b identisch mit den Schichtdicken der Zwischenschichten 4a und 4b. Das zuvor zu den Schichtdicken des jeweiligen Bauteils 5 Gesagte gilt erfindungsgemäß gleichermaßen für die Schichtdicken des zugrundeliegende mehrschichten Stahlflachprodukts 1. Auch hier können die äußeren Schichten 3a und 3b und/oder Zwischenschichten 4a und 4b gleich dick und insbesondere dünner als die Kernschicht 2 sein.

In Fig. 1c) ist ein Stahlflachprodukt 1 in perspektivischer Ansicht schematisch dargestellt. Fig. 1d) zeigt eine schematische Schnittansicht des Bauteils 1 entlang der in Fig. 1c) gezeigten Schnittlinie Id-Id (die Ansicht in Fig. 1d) ist also in Walzrichtung bzw. in Richtung X gesehen).

Bei dem Stahlflachprodukt 1 in den Figuren 1c) und 1d) ist erkennbar, dass auch in Querrichtung Y ein Abschnitt 4a.1 aus einem Stahl einer ersten Stahllegierung mit hoher Festigkeit (im Endzustand) an einen Abschnitt 4a.2 eines Stahls einer zweiten Stahllegierung mit geringerer Festigkeit und daran sogar wiederum noch ein Abschnitt 4a.1 aus einem Stahl der ersten Stahllegierung angrenzt. Entsprechendes gilt sinngemäß auch für die jeweils andere Zwischenschicht 4b.

In Fig. 1c ist ferner erkennbar, dass auch in der oberen Schicht 3a in, hier beispielhaft unsymmetrischen, Bereichen Abschnitte aus unterschiedlichen Stahllegierungen vorgesehen sein können. Diese symmetrischen oder unsymmetrischen Abschnitte können auch in einer oder mehreren anderen Schichten, z.B. in der unteren Schicht 3b, vorgesehen sein.

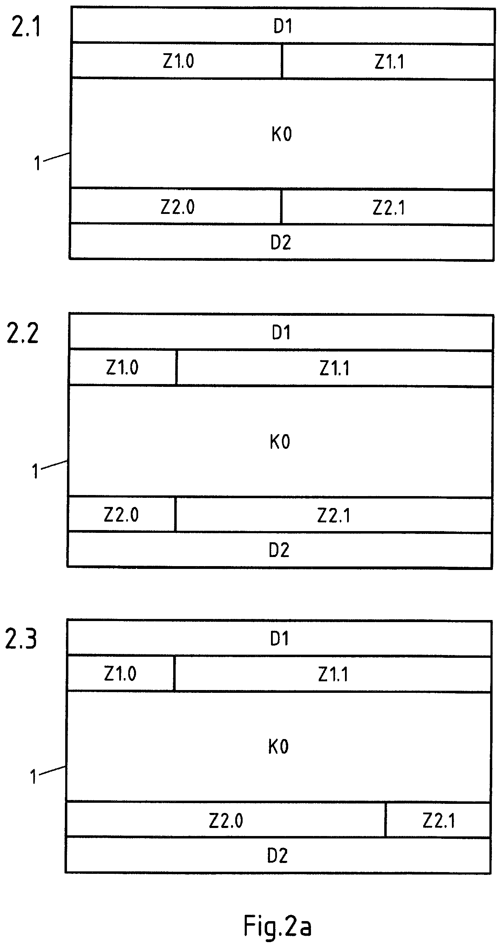

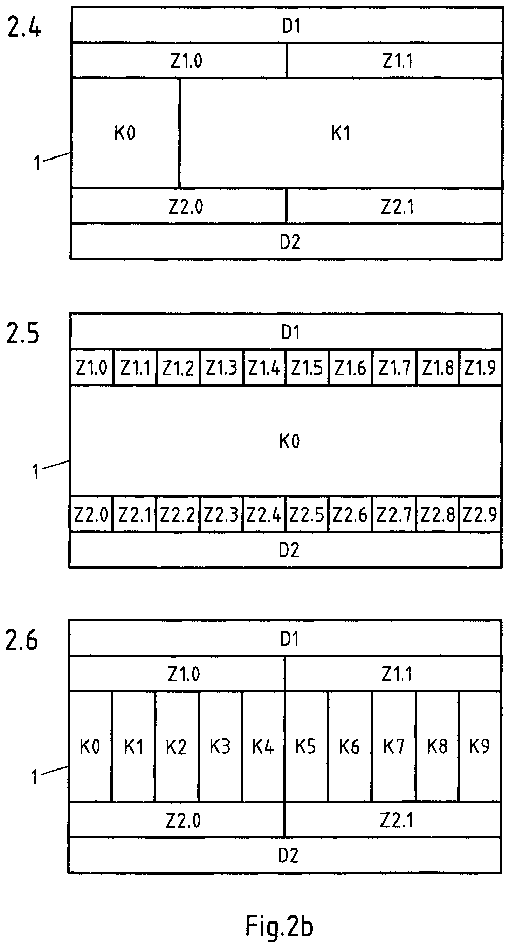

Fig. 2 zeigt schließlich schematisch weitere Varianten eines Stahlflachprodukts 1, wobei erkennbar ist, dass sowohl die Kernschicht als auch jede Zwischenschicht jeweils aus Abschnitten unterschiedlicher Stahllegierungen bestehen kann. Dabei weisen einige der Abschnitte einen härtbaren Stahl mit einem relativ hohen Kohlenstoffanteil auf, wohingegen andere Abschnitte einen Stahl mit einem relativ geringen Kohlenstoffanteil aufweisen. Die einzelnen Abschnitte der Kernschicht sind mit "K0 ... K9" bezeichnet, die verschiedenen Abschnitte der Zwischenschichten mit "Z1.0 ... Z1.9" bzw. "Z2.0 ... Z2.9". Die Deckschichten sind hier mit "D1" bzw. "D2" bezeichnet und bestehen immer vollständig aus derselben Stahllegierung.

## Patentansprüche

1. Mindestens fünfschichtiges Stahlflachprodukt (1) bestehend aus einer Mehrzahl durch Warmwalzen stoffschlüssig miteinander verbundener Stahllegierungsschichten (2,3a,3b,4a,4b), wobei in mindestens einer der Stahllegierungsschichten (2,3a,3b,4a,4b) ein Stahl einer ersten Stahllegierung und in mindestens einer anderen der Stahllegierungsschichten (2,3a,3b,4a,4b) ein Stahl einer zweiten Stahllegierung, die von der ersten Stahllegierung verschieden ist, vorgesehen ist, wobei der Stahl der ersten Stahllegierung ein Stahl mit hoher Festigkeit und der Stahl der zweiten Stahllegierung ein Stahl mit geringerer Festigkeit und einem geringeren Kohlenstoffanteil ist, **dadurch gekennzeichnet, dass** mindestens innerhalb einer Schicht in Längsrichtung (X) und in Querrichtung (Y) des Stahlflachprodukts (1) mindestens ein Stahl der ersten Stahllegierung und mindestens ein Stahl der zweiten Stahllegierung vorgesehen ist, wobei ein Abschnitt (4a.2,4b.2) aus dem Stahl der ersten Stahllegierung an einen Abschnitt (4a.1, 4b.1) aus dem Stahl der zweiten Stahllegierung angrenzt und/oder sich der Abschnitt (4a.2,4b.2) aus dem Stahl der ersten Stahllegierung und der Abschnitt (4a.1, 4b.1) aus dem Stahl der zweiten Stahllegierung abwechseln,
- wobei die erste Stahllegierung aus einem Stahl besteht, der im gehärteten Zustand eine Zugfestigkeit von mindestens 1200 MPa aufweist, der neben Eisen und herstellungsbedingt unvermeidbaren Verunreinigungen, aus in Gew.-% C: 0,2 - 0,5 %,
Si: 0,15 - 0,8 %,
Mn: 1,0 - 1,9 %,
Al: 0,002 - 0,05 %,
Cr: 0,01 - 0,5 %,
Ti: 0,0020 - 0,5 % und
B: 0,0002 - 0,05 %
besteht, wobei zu den Verunreinigungen zählen
P: bis zu 0,03%
S: bis zu 0,03%,
Cu: Bis zu 0,1%,
Mo: bis zu 0,05%,
N: bis zu 0,02%,
Ni: bis zu 0,1%,
Nb: bis zu 0,2%,
V: bis zu 0,01%,
Sn: bis zu 0,03%,
Ca: bis zu 0,01%,
- wobei die zweite Stahllegierung aus einem Stahl besteht, der neben Eisen und herstellungsbedingt unvermeidbaren Verunreinigungen aus in Gew.-% C: bis zu 0,15 %,
Si: bis zu 0,7 %,
Mn: 0,10 - 1,9 %,
Al: bis zu 0,6 %,
Cr: bis zu 0,6 %,
Nb: bis zu 0,5 % und
Ti: bis zu 0,5 %
besteht, wobei zu den Verunreinigungen zählen
P: bis zu 0,25%
S: bis zu 0,15%,
Cu: Bis zu 0,15%,
Mo: bis zu 0,05%,
N: bis zu 0,06%,
Ni: bis zu 0,15%,
V: bis zu 0,01%,
B: bis zu 0,01%
Sn: bis zu 0,04%,
Ca: bis zu 0,03%.

2. Stahlflachprodukt (1) nach Anspruch 1, **dadurch gekennzeichnet, dass** der Kohlenstoffanteil des Stahls der ersten Stahllegierung einen Wert in einem Bereich von 0,20 - 0,50 Gew.-% und/oder der Kohlenstoffanteil des Stahls der zweiten Stahllegierung einen Wert in einem Bereich von 0,02 - 0,15 Gew.-% hat.

3. Stahlflachprodukt (1) nach Anspruch 1 oder 2, **dadurch gekennzeichnet, dass** das Stahlflachprodukt (1) aus einer ungeraden Anzahl von Stahllegierungsschichten (2,3a,3b,4a,4b) besteht.

4. Stahlflachprodukt (1) nach einem der Ansprüche 1 bis 3, **dadurch gekennzeichnet, dass** das Stahlflachprodukt (1) aus fünf Stahllegierungsschichten (2,3a,3b,4a,4b)besteht und eine Kernschicht (2) aufweist, die aus einer Stahllegierungsschicht mit dem Stahl der ersten Stahllegierung besteht.

5. Stahlflachprodukt (1) nach einem der vorangehenden Ansprüche, **dadurch gekennzeichnet, dass** die mindestens eine Stahllegierungsschicht (2,4a,4b) mit dem Stahl der ersten Stahllegierung und/oder die mindestens eine Stahllegierungsschicht (3a,3b,4a,4b) mit dem Stahl der zweiten Stahllegierung mindestens einen Abschnitt (4a.1,4a.2,4b.1,4b.2) aus einem Stahl der jeweils anderen Stahllegierung aufweist.

6. Stahlflachprodukt (1) nach Anspruch 5, **dadurch gekennzeichnet, dass** in Längsrichtung (X) und/oder in Querrichtung (Y) und/oder in Blechdickenrichtung (Z) ein Abschnitt (4a.2,4b.2) aus einem Stahl der ersten Stahllegierung an einen Abschnitt (4a.1, 4b.1) aus einem Stahl der zweiten Stahllegierung angrenzt.

7. Stahlflachprodukt (1) nach einem der Ansprüche 4 bis 6, **dadurch gekennzeichnet, dass** die Kernschicht (2) 30 - 90 % der Dicke des Stahlflachprodukts (1) einnimmt.

8. Stahlflachprodukt nach einem der Ansprüche 4 bis 7, **dadurch gekennzeichnet, dass** die Kernschicht (2) aus einem Stahl besteht, der neben Eisen und herstellungsbedingt unvermeidbaren Verunreinigungen, aus in Gew.-% C: 0,2 - 0,45 %,
Si : 0,3 - 0,6 %,
Mn: 1,1 - 1,5 %,
Al: 0,001 - 0,04 %,
Cr: 0,01 - 0,45 %,
Ti: 0,002 - 0,2 % und
B: 0,002 - 0,01 % besteht.

9. Stahlflachprodukt nach Anspruch 1, **dadurch gekennzeichnet, dass** eine oder beide äußeren Schichten (3a, 3b) aus einem Stahl besteht/bestehen, der neben Eisen und herstellungsbedingt unvermeidbaren Verunreinigungen, aus in Gew.-% C: 0,02 - 0,11,
Si: 0,01 - 0,6 %,
Mn: 0,13 - 1,8 %,
Al: 0,001 - 0,2 %,
Cr: 0,025 - 0,5 %,
Nb: 0,002 - 0,2 % und
Ti: 0,02 - 0,3 % besteht.

10. Bauteil (5) für eine Fahrzeugkarosserie, hergestellt durch Warmumformen und Presshärten eines gemäß einem der vorangehenden Ansprüche ausgebildeten Stahlflachprodukts (1).

## Claims

1. At least five-layered flat steel product (1) consisting of a multitude of steel alloy layers (2, 3a, 3b, 4a, 4b) cohesively bonded to one another by hot rolling, with provision of a steel of a first steel alloy in at least one of the steel alloy layers (2, 3a, 3b, 4a, 4b) and of a steel of a second steel alloy different than the first steel alloy in at least one of the other steel alloy layers (2, 3a, 3b, 4a, 4b), the steel of the first steel alloy being a steel of high strength and the steel of the second steel alloy a steel of lower strength and lower carbon content, **characterized in that** at least one steel of the first steel alloy and at least one steel of the second steel alloy are provided at least within one layer in longitudinal direction (X) and in transverse direction (Y) of the flat steel product (1), wherein a section (4a.2, 4b.2) composed of the steel of the first steel alloy adjoins a section (4a.1, 4b.1) composed of the steel of the second steel alloy and/or the section (4a.2, 4b.2) composed of the steel of the first steel alloy alternates with the section (4a.1, 4b.1) composed of the steel of the second steel alloy,
- wherein the first steel alloy consists of a steel which, has a tensile strength of at least 1200 MPa in the hardened state, and aside from iron and unavoidable impurities from the production, consists of, in % by weight,
| | |
|---|---|
| C: | 0.2%-0.5%, |
| Si: | 0.15%-0.8%, |
| Mn: | 1.0%-1.9%, |
| Al: | 0.002%-0.05%, |
| Cr: | 0.01 %-0.5%, |
| Ti: | 0.0020%-0.5% and |
| B: | 0.0002%-0.05%, |
wherein the impurities include
| | |
|---|---|
| P: | up to 0.03%, |
| S: | up to 0.03%, |
| Cu: | up to 0.1%, |
| Mo: | up to 0.05%, |
| N: | up to 0.02%, |
| Ni: | up to 0.1%, |
| Nb: | up to 0.2%, |
| V: | up to 0.01%, |
| Sn: | up to 0.03%, |
| Ca: | up to 0.01%, |
- wherein the second steel alloy consists of a steel which, aside from iron and unavoidable impurities from the production, consists of, in % by weight,
| | |
|---|---|
| C: | up to 0.15%, |
| Si: | up to 0.7%, |
| Mn: | 0.10%-1.9%, |
| Al: | up to 0.6%, |
| Cr: | up to 0.6%, |
| Nb: | up to 0.5% and |
| Ti: | up to 0.5%, |
wherein the impurities include:
| | |
|---|---|
| P: | up to 0.25%, |
| S: | up to 0.15%, |
| Cu: | up to 0.15%, |
| Mo: | up to 0.05%, |
| N: | up to 0.06%, |
| Ni: | up to 0.15%, |
| V: | up to 0.01%, |
| B: | up to 0.01%, |
| Sn: | up to 0.04%, |
| Ca: | up to 0.03%. |

2. Flat steel product (1) according to Claim 1, **characterized in that** the carbon content of the steel of the first steel alloy has a value within a range of 0.20%-0.50% by weight and/or the carbon content of the steel of the second steel alloy has a value within a range of 0.02%-0.15% by weight.

3. Flat steel product (1) according to Claim 1 or 2, **characterized in that** the flat steel product (1) consists of an odd number of steel alloy layers (2, 3a, 3b, 4a, 4b).

4. Flat steel product (1) according to any of Claims 1 to 3, **characterized in that** the flat steel product (1) consists of five steel alloy layers (2, 3a, 3b, 4a, 4b) and has a core layer (2) consisting of a steel alloy layer comprising the steel of the first steel alloy.

5. Flat steel product (1) according to any of the preceding claims, **characterized in that** the at least one steel alloy layer (2, 4a, 4b) comprising the steel of the first steel alloy and/or the at least one steel alloy layer (3a, 3b, 4a, 4b) comprising the steel of the second steel alloy has at least one section (4a.1, 4a.2, 4b.1, 4b.2) composed of a steel of the respective other steel alloy.

6. Flat steel product (1) according to Claim 5, **characterized in that** a section (4a.2, 4b.2) composed of a steel of the first steel alloy adjoins a section (4a.1, 4b.1) composed of a steel of the second steel alloy in longitudinal direction (X) and/or in transverse direction (Y) and/or in sheet thickness direction (Z).

7. Flat steel product (1) according to any of Claims 4 to 6, **characterized in that** the core layer (2) accounts for 30%-90% of the thickness of the flat steel product (1).

8. Flat steel product according to any of Claims 4 to 7, **characterized in that** the core layer (2) consists of a steel which, aside from iron and unavoidable impurities from the production, consists of, in % by weight,
| | |
|---|---|
| C: | 0.2%-0.45%, |
| Si: | 0.3%-0.6%, |
| Mn: | 1.1%-1.5%, |
| Al: | 0.001%-0.04%, |
| Cr: | 0.01 %-0.45%, |
| Ti: | 0.002%-0.2% and |
| B: | 0.002%-0.01%. |

9. Flat steel product according to Claim 1, **characterized in that** one or both outer layers (3a, 3b) consist(s) of a steel which, aside from iron and unavoidable impurities from the production, consists of, in % by weight,
| | |
|---|---|
| C: | 0.02%-0.11%, |
| Si: | 0.01%-0.6%, |
| Mn: | 0.13%-1.8%, |
| Al: | 0.001%-0.2%, |
| Cr: | 0.025%-0.5%, |
| Nb: | 0.002%-0.2% and |
| Ti: | 0.02%-0.3%. |

10. Component (5) for a motor vehicle chassis, produced by hot forming and press hardening of a flat steel product (1) detailed in any of the preceding claims.

## Revendications

1. Produit plat en acier (1) au moins à cinq couches, constitué par une pluralité de couches en alliage d'acier (2, 3a, 3b, 4a, 4b) reliées les unes avec les autres par accouplement de matière par cylindrage à chaud, un acier d'un premier alliage d'acier étant prévu dans au moins une des couches en alliage d'acier (2, 3a, 3b, 4a, 4b) et un acier d'un deuxième alliage d'acier, qui est différent du premier alliage d'acier, étant prévu dans au moins une autre des couches en alliage d'acier (2, 3a, 3b, 4a, 4b), l'acier du premier alliage d'acier étant un acier présentant une résistance élevée et l'acier du deuxième alliage d'acier étant un acier présentant une résistance plus faible et une proportion de carbone plus faible, **caractérisé en ce qu'**au moins un acier du premier alliage d'acier et au moins un acier du deuxième alliage d'acier sont prévus au moins dans une couche dans la direction longitudinale (X) et dans la direction transversale (Y) du produit plat en acier (1), une section (4a.2, 4b.2) de l'acier du premier alliage d'acier étant adjacente à une section (4a.1, 4b.1) de l'acier du deuxième alliage d'acier, et/ou la section (4a.2, 4b.2) de l'acier du premier alliage d'acier et la section (4a.1, 4b.1) de l'acier du deuxième alliage d'acier s'alternant,
- le premier alliage d'acier étant constitué par un acier qui présente à l'état durci une résistance à la traction d'au moins 1 200 MPa, qui est constitué par, en plus du fer et des impuretés inévitables liées à la fabrication, en % en poids :
| | |
|---|---|
| C : | 0,2 à 0,5 %, |
| Si : | 0,15 à 0,8 %, |
| Mn : | 1,0 à 1,9 %, |
| Al : | 0,002 à 0,05 %, |
| Cr : | 0,01 à 0,5 %, |
| Ti : | 0,0020 à 0,5 % et |
| B : | 0,0002 à 0,05 %, |
les impuretés comprenant :
| | |
|---|---|
| P : | jusqu'à 0,03 %, |
| S : | jusqu'à 0,03 %, |
| Cu : | jusqu'à 0,1 %, |
| Mo : | jusqu'à 0,05 %, |
| N : | jusqu'à 0,02 %, |
| Ni : | jusqu'à 0,1 %, |
| Nb : | jusqu'à 0,2 %, |
| V : | jusqu'à 0,01 %, |
| Sn : | jusqu'à 0,03 %, |
| Ca : | jusqu'à 0,01 %, |
- le deuxième alliage d'acier étant constitué par un acier qui est constitué par, en plus du fer et des impuretés inévitables liées à la fabrication, en % en poids :
| | |
|---|---|
| C : | jusqu'à 0,15 %, |
| Si : | jusqu'à 0,7 %, |
| Mn : | 0,10 à 1,9 %, |
| Al : | jusqu'à 0,6 %, |
| Cr : | jusqu'à 0,6 %, |
| Nb : | jusqu'à 0,5 % et |
| Ti : | jusqu'à 0,5 %, |
les impuretés comprenant :
| | |
|---|---|
| P : | jusqu'à 0,25 %, |
| S : | jusqu'à 0,15 %, |
| Cu : | jusqu'à 0,15 %, |
| Mo : | jusqu'à 0,05 %, |
| N : | jusqu'à 0,06 %, |
| Ni : | jusqu'à 0,15 %, |
| V: | jusqu'à 0,01 %, |
| B : | jusqu'à 0,01 % |
| Sn : | jusqu'à 0,04 %, |
| Ca : | jusqu'à 0,03 %. |

2. Produit plat en acier (1) selon la revendication 1, **caractérisé en ce que** la proportion de carbone de l'acier du premier alliage d'acier présente une valeur dans une plage allant de 0,20 à 0,50 % en poids et/ou la proportion de carbone de l'acier du deuxième alliage d'acier présente une valeur dans une plage allant de 0,02 à 0,15 % en poids.

3. Produit plat en acier (1) selon la revendication 1 ou 2, **caractérisé en ce que** le produit plat en acier (1) est constitué par un nombre impair de couches en alliage d'acier (2, 3a, 3b, 4a, 4b).

4. Produit plat en acier (1) selon l'une quelconque des revendications 1 à 3, **caractérisé en ce que** le produit plat en acier (1) est constitué par cinq couches en alliage d'acier (2, 3a, 3b, 4a, 4b) et comprend une couche de noyau (2), qui est constituée par une couche en alliage d'acier contenant l'acier du premier alliage d'acier.

5. Produit plat en acier (1) selon l'une quelconque des revendications précédentes, **caractérisé en ce que** ladite au moins une couche en alliage d'acier (2, 4a, 4b) contenant l'acier du premier alliage d'acier et/ou ladite au moins une couche en alliage d'acier (3a, 3b, 4a, 4b) contenant l'acier du deuxième alliage d'acier comprennent au moins une section (4a.1, 4a.2, 4b.1, 4b.2) en un acier de l'autre alliage d'acier respectif.

6. Produit plat en acier (1) selon la revendication 5, **caractérisé en ce qu'**une section (4a.2, 4b.2) en un acier du premier alliage d'acier est adjacente à une section (4a.1, 4b.1) en un acier du deuxième alliage d'acier dans la direction longitudinale (X) et/ou dans la direction transversale (Y) et/ou dans la direction de l'épaisseur de la tôle (Z).

7. Produit plat en acier (1) selon l'une quelconque des revendications 4 à 6, **caractérisé en ce que** la couche de noyau (2) occupe 30 à 90 % de l'épaisseur du produit plat en acier (1).

8. Produit plat en acier selon l'une quelconque des revendications 4 à 7, **caractérisé en ce que** la couche de noyau (2) est constituée par un acier qui est constitué par, en plus du fer et des impuretés inévitables liées à la fabrication, en % en poids :
| | |
|---|---|
| C : | 0,2 à 0,45%, |
| Si : | 0,3 à 0,6 %, |
| Mn : | 1,1 à 1,5 %, |
| Al : | 0,001 à 0,04 %, |
| Cr : | 0,01 à 0,45 %, |
| Ti : | 0,002 à 0,2 %, et |
| B : | 0,002 à 0,01 %. |

9. Produit plat en acier selon la revendication 1, **caractérisé en ce qu'**une des ou les deux couches extérieures (3a, 3b) sont constituées par un acier qui est constitué par, en plus du fer et des impuretés inévitables liées à la fabrication, en % en poids :
| | |
|---|---|
| C: | 0,02 à 0,11 %, |
| Si : | 0,01 à 0,6%, |
| Mn : | 0,13 à 1,8%, |
| Al : | 0,001 à 0,2 %, |
| Cr : | 0,025 à 0,5 %, |
| Nb : | 0,002 à 0,2 % et |
| Ti : | 0,02 à 0,3 %. |

10. Composant (5) pour une carrosserie de véhicule, fabriqué par déformation à chaud et durcissement sous presse d'un produit plat en acier (1) configuré selon l'une quelconque des revendications précédentes.
